Europäisches Patentamt

European Patent Office

Office européen des brevets

(19)

(11) **EP 0 832 730 B1**

(12) **FASCICULE DE BREVET EUROPEEN**

(45) Date de publication et mention
de la délivrance du brevet:
**12.12.2001 Bulletin 2001/50**

(51) Int Cl.⁷: **B29C 55/00**

(21) Numéro de dépôt: **97202889.8**

(22) Date de dépôt: **19.09.1997**

(54) **Procédé de traitement d'une matière thermoplastique semi-cristalline**

Verfahren zur Behandlung eines thermoplastischen, semikristallinen Kunststoffes

Method for treating a thermoplastic semicrystalline material

(84) Etats contractants désignés:
**AT BE CH DE DK ES FI FR GB IE IT LI NL SE**

(30) Priorité: **30.09.1996 BE 9600819**

(43) Date de publication de la demande:
**01.04.1998 Bulletin 1998/14**

(73) Titulaire: **SOLVAY (Société Anonyme)**
**1050 Bruxelles (BE)**

(72) Inventeurs:
• **Gilliard, Pierre**
**1120 Bruxelles (BE)**
• **Dehennau, Claude**
**1410 Waterloo (BE)**
• **Karsten, Petrus**
**1602 DL Enkhuizen (NL)**

(74) Mandataire: **Dufrasne, Eugène et al**
**Solvay S.A.,**
**Département Propriété Industrielle,**
**310, rue de Ransbeek**
**1120 Bruxelles (BE)**

(56) Documents cités:
**EP-A- 0 509 580        FR-A- 1 211 161**
**US-A- 4 603 174**

• **DATABASE WPI Section Ch, Week 9405 Derwent**
**Publications Ltd., London, GB; Class A14, AN**
**94-040083 XP002032557 & JP 05 345 843 A**
**(SUMITOMO BAKELITE CO) , 27 décembre 1993**
• **DATABASE WPI Section Ch, Week 8813 Derwent**
**Publications Ltd., London, GB; Class A18, AN**
**88-088169 XP002032558 & JP 63 039 329 A**
**(DAICEL CHEM IND LTD) , 19 février 1988**

**Description**

La présente invention concerne un procédé de mise en oeuvre d'une matière thermoplastique, permettant de fabriquer des articles de transparence élevée, en particulier des films. Elle concerne également des films particuliers pouvant être obtenus par ce procédé.

Les films transparents constituent une très importante application des matières thermoplastiques, notamment dans le domaine de l'emballage. En particulier, à titre d'exemple, parmi les polymères utilisés pour la fabrication de films transparents, les polymères du propylène occupent une place croissante.

L'amélioration de la transparence des films, qui reste un objectif constant des industries concernées, peut non seulement être obtenue par une optimisation de la nature chimique des polymères, mais encore par le choix de conditions de mise en oeuvre particulières. De manière générale, la transparence de polymères semi-cristallins peut être accrue en diminuant leur cristallinité et/ou la dimension de leurs cristallites.

Sur le plan de la nature chimique des compositions utilisées, des techniques connues à cette fin sont notamment l'ajout d'un comonomère de manière à obtenir un copolymère statistique moins cristallin, ou encore l'ajout d'un agent nucléant (talc, ...) réduisant la taille des cristallites et augmentant leur nombre. Sur le plan des conditions de mise en oeuvre, des techniques classiques consistent notamment à étirer le film à l'état solide de manière à morceler les cristallites (par exemple dans le cas de films biorientés), ou encore à refroidir très rapidement les films (trempe) immédiatement après leur fabrication, de manière à réduire la taille des cristallites et à simultanément réduire la cristallinité du polymère. Dans ce dernier cas, toutefois, la cristallinité aura tendance à croître au fil du temps, et ce d'autant plus vite que le film est réchauffé.

Plusieurs procédés ont déjà été proposés en vue d'améliorer certaines propriétés mécaniques et optiques de films à base de matière thermoplastique. Ainsi, dans le document FR 1211161, un tel film est extrudé à une température sensiblement supérieure au point de fusion cristalline, puis refroidi à une température située dans un intervalle allant de juste au-dessous de sa température de fusion cristalline jusqu'à 12 degrés au-dessous de cette température, puis étiré dans cet intervalle de température et refroidi sous tension.

Un inconvénient de ce procédé est qu'il utilise un refroidissement lent sous tension et que ce faisant on perd une partie du bénéfice de l'étirage et des propriétés optiques (transparence) qu'il confère.

La présente invention vise dès lors à fournir un procédé simple à mettre en oeuvre et permettant notamment de fabriquer des articles plats à base de matière thermoplastique présentant des propriétés optiques, et en particulier une transparence, améliorées.

De manière plus précise, l'invention concerne un procédé de mise en oeuvre d'une matière thermoplastique semi-cristalline, comprenant successivement les étapes suivantes :

(1) un extrudat de matière thermoplastique semi-cristalline en fusion est refroidi à une température $T_1$ supérieure à la température de cristallisation de la matière thermoplastique ($T_c$) et inférieure à $T_f + 5°C$, $T_f$ désignant la température de fusion de la matière thermoplastique ;
(2) l'extrudat est ensuite étiré à l'état fondu ;
(3) l'extrudat est ensuite relaxé, à une température $T_3$ comprise entre $T_c$ et $T_f$, pendant une durée au moins égale au temps moyen de relaxation ($\tau_3$) de la matière thermoplastique à la température de relaxation et après l'étirage ;
(4) l'extrudat est ensuite trempé à une température $T_4$ inférieure à $T_c$.

Ce procédé permet de fabriquer des articles plats tels que des films (d'une épaisseur typique de l'ordre de la centaine de μm) ou des plaques (d'une épaisseur typique de l'ordre du millimètre). Pour des raisons de simplicité, les spécificités du procédé de l'invention seront essentiellement décrites dans le contexte de la fabrication de tels articles plats, bien que ce procédé permette également de fabriquer tout autre article de section constante tel que barre, profilé, tuyau, etc., moyennant quelques adaptations évidentes pour l'homme du métier.

De manière classique, l'étape préalable de fusion de la matière thermoplastique s'effectue à une température nettement supérieure à sa température de fusion ($T_f$). Une telle fusion préalable peut s'effectuer au moyen de tout dispositif connu tel qu'extrudeuse ou malaxeur. On qualifiera d'extrudat la masse de matière thermoplastique produite, généralement en continu, par ce dispositif, même s'il ne s'agit pas d'une extrudeuse.

Par rapport au procédé antérieurement connu susmentionné, le procédé proposé se distingue par la présence d'une étape de relaxation à température élevée (3) suivie d'un refroidissement bref et énergique (4), alors que selon le procédé antérieurement connu, on laisse simplement le film se refroidir naturellement, et ce sous tension.

Pour rappel, les températures de fusion ($T_f$) et de cristallisation ($T_c$) correspondent aux pics endo- et exothermiques relevés par calorimétrie différentielle à balayage (DSC), respectivement lors du chauffage et lors du refroidissement de la matière thermoplastique considérée, en l'absence de toute contrainte extérieure.

La matière thermoplastique est semi-cristalline, c'est-à-dire qu'elle comprend au moins 50 % en poids d'un ou plusieurs polymères thermoplastiques semi-cristallins, tels que par exemple des polyoléfines ou du polyfluorure de vinylidène. Elle peut en outre éventuellement comprendre une proportion minoritaire d'un ou plusieurs autres polymères thermoplastiques, ainsi qu'éventuellement des quantités modérées d'additifs tels qu'antioxydants, stabilisants, pigments, etc. De préférence, la matière thermoplastique comprend au moins une polyoléfine. De manière particulièrement préférée, la matière thermoplastique comprend au moins 50 % en masse d'une ou plusieurs polyoléfines. Idéalement, la matière thermoplastique est essentiellement constituée d'une ou plusieurs polyoléfines. Comme polyoléfine, on peut avantageusement utiliser un polymère du propylène. D'excellents résultats ont été obtenus avec des copolymères éthylène-propylène, ainsi qu'avec les homopolymères du propylène.

Le refroidissement (1) de l'extrudat se fait de préférence à une température $T_1$ inférieure à $T_f$. Ce refroidissement peut se réaliser de toute manière connue, notamment par contact avec au moins un cylindre refroidi disposé à proximité immédiate du dispositif d'où sort l'extrudat. Le refroidissement de ce cylindre peut par exemple s'effectuer par circulation interne d'un fluide maintenu à la température appropriée par un dispositif de conditionnement thermique. Afin de réduire la durée du refroidissement, il est avantageux de refroidir les deux faces de l'extrudat, par exemple sur deux cylindres conditionnés consécutifs, l'extrudat décrivant un trajet en S. Au lieu d'un cylindre unique, on peut également utiliser une paire de cylindres pinçant l'extrudat, lorsqu'il se présente sous la forme d'une bande. L'étirage (2) peut se réaliser de toute manière connue, notamment en exerçant une traction sur l'extrudat au moyen d'un cylindre ou d'une paire de cylindres, disposé(s) en aval et entraîné(s) par un moteur dont la vitesse est judicieusement contrôlée. De bons résultats sont obtenus lorsque le taux d'étirage lors de l'étape (2) est d'au moins 200 %, et de préférence d'au moins 300 %. Lorsqu'au moins un cylindre est utilisé pour chacune des étapes de refroidissement (1) et d'étirage (2), le taux d'étirage est voisin du rapport des vitesses périphériques du ou des cylindres utilisés pour le refroidissement (1) et du ou des cylindres utilisés pour l'étirage (2).

Les conditions de l'étirage sont avantageusement telles que le gradient de vitesse soit d'au moins $1 / (20.\tau_0)$, où $\tau_0$ désigne le temps moyen de relaxation de la matière thermoplastique à la température d'extrusion ($T_0$) et en l'absence de toute contrainte d'étirage. De préférence, ce gradient de vitesse est d'au moins $1 / (10.\tau_0)$. Le temps de relaxation $\tau_0$ est défini par la relation, $\tau_0 = \frac{2.\eta_0.M_c}{\rho.R.T}$ dans laquelle $\eta_0$ désigne la viscosité dynamique de la matière thermoplastique pour des gradients de vitesse tendant vers 0, $\rho$ est sa masse volumique, $M_c$ est la masse moléculaire (moyenne en poids) critique au-delà de laquelle $\eta_0$ est proportionnelle à la puissance 3,4 de la masse moléculaire, et R et $T_0$ désignent la constante des gaz parfaits ainsi que la température absolue d'extrusion (sortie filière).

L'étirage peut être monoaxial ou biaxial ; toutefois, il est de préférence monoaxial, c'est-à-dire que l'extrudat conserve sensiblement sa largeur initiale, un léger rétrécissement transversal étant toutefois possible.

La zone où se trouve l'extrudat lorsqu'il subit cet étirage est avantageusement protégée des variations intempestives de température, en particulier des courants d'air ; éventuellement, cette zone est équipée de moyens de chauffage, par exemple à infrarouges, permettant de maintenir la matière thermoplastique à la température requise.

Une caractéristique importante du procédé de l'invention est que l'étirage (2) se déroule alors que la matière thermoplastique se trouve toujours à l'état fondu . Ceci n'implique pas forcément que la température $T_2$ à laquelle se déroule l'étirage soit supérieure à $T_f$. En effet, dans la plage de température comprise entre $T_c$ et $T_f$, une matière thermoplastique semi-cristalline peut indifféremment se trouver à l'état fondu ou solide, en fonction de son histoire thermique. En général, à l'intérieur de cette plage, une matière thermoplastique semi-cristalline se trouvera à l'état fondu si elle a été refroidie à partir d'une température supérieure à $T_f$, et à l'état solide si elle a été chauffée à partir d'une température inférieure à $T_c$. Dans le procédé de la présente invention, c'est le premier de ces deux cas qui est retenu ; l'étirage se déroule généralement à une température ($T_2$) comprise entre $T_c$ et $T_f+5°C$, de préférence inférieure à $T_f$.

Selon une variante très simple du procédé, l'étirage se déroule approximativement à la température $T_1$ du refroidissement (1), sans réchauffage ni refroidissement complémentaire.

Lorsqu'il est réalisé dans les conditions indiquées, l'étirage provoque une nucléation cristalline très importante de la matière thermoplastique, supérieure de plusieurs ordres, en termes du nombre de cristallites, à une nucléation hétérogène (au moyen de talc, etc.).

En outre, les conditions d'étirage sont telles qu'aucune inversion de $T_c$ et $T_f$ ne se produit, contrairement à ce qui est généralement le cas lorsqu'une matière thermoplastique est biorientée dans une filière d'extrusion, où elle subit des contraintes énormes.

Toute relaxation d'une matière thermoplastique vise en général à réduire ses tensions internes, en particulier celles de sa phase amorphe, et ainsi l'ampleur d'éventuels retraits ultérieurs en cas de réchauffage. Toutefois, dans le cadre du procédé de la présente invention, une relaxation semble a priori peu recommandable, étant donné qu'elle risque de faire perdre le bénéfice de l'étape d'étirage (2) et de réduire ainsi la transparence des articles fabriqués.

De manière surprenante, il a cependant été constaté que les conditions de relaxation spécifiques susmentionnées permettaient de conserver le bénéfice de l'étape d'étirage (2) tout en réduisant l'amplitude d'un éventuel retrait ultérieur des articles lors de leur utilisation.

De préférence, la relaxation (3) s'effectue à une température $T_3$ supérieure à $T_c+5°C$. Elle s'effectue avantageusement à une température inférieure à $T_f-5°C$. La durée de la relaxation peut être choisie en fonction de la rigidité souhaitée de l'article fabriqué: une durée de relaxation plus élevée conduira à une rigidité plus faible. De préférence, cette durée est d'au moins $2.\tau_3$. La valeur de $\tau3$ est calculée comme indiqué ci-dessus, en remplaçant $T_0$ par $T_3$ (température absolue) (en négligeant donc les variations éventuelles de $\eta_0$ et de $\rho$). Par ailleurs, la durée de la relaxation est avantageusement d'au moins 1 s, de préférence d'au moins 2 s.

De préférence, la relaxation s'effectue à dimensions constantes et en l'absence de toute contrainte extérieure. Dans le cas de la fabrication d'articles plats, elle peut par exemple s'effectuer à la surface d'un cylindre maintenu à la température appropriée, disposé en aval du dispositif (par exemple du cylindre) d'étirage. Selon une variante avantageuse, la relaxation s'effectue sur le cylindre qui exerce une traction sur l'extrudat en vue de son étirage (2), ce qui permet d'économiser un cylindre. Dans ce cas, il est inévitable qu'une certaine portion de l'extrudat en contact avec le cylindre, située du côté "amont", c'est-à-dire dans la direction du dispositif d'où sort l'extrudat, puisse glisser par rapport au cylindre et soit ainsi soumise à des contraintes d'étirage. La longueur de cette portion est généralement inférieure à 1 cm. La partie de l'extrudat qui se trouve en aval de cette portion n'est par contre soumise à aucune contrainte d'étirage ; dans les conditions industrielles usuelles, sa longueur est généralement d'au moins 20 cm. Il est préférable de veiller à ce que la longueur totale d'extrudat en contact avec le cylindre d'étirage soit suffisamment élevée pour que seule une faible proportion de l'extrudat en contact avec ce cylindre subisse des contraintes d'étirage. Si une durée de relaxation particulièrement élevée est souhaitée, il est possible d'utiliser un cylindre de diamètre supérieur, ou d'utiliser plusieurs cylindres consécutifs.

Il est à noter qu'une telle relaxation ne peut pas être obtenue à l'intérieur d'une filière d'extrusion, en raison des contraintes de cisaillement élevées qu'y subirait la matière thermoplastique.

Une variante avantageuse du procédé de l'invention consiste à lui combiner, préalablement à l'étape de relaxation (3), une étape de grainage de l'extrudat dans laquelle ce dernier est pincé entre deux cylindres métalliques, de préférence de haute dureté (dureté Vickers de préférence supérieure à 150 HV), par exemple constitués ou revêtus d'acier ou de fonte. L'un au moins de ces cylindres doit être sablé ou gravé sur au moins une partie de sa surface afin de réaliser le grainage en question. Le type de grainage de chacune des faces de l'extrudat peut différer : on peut par exemple utiliser un premier cylindre sablé (conduisant à l'obtention d'une face mate) et un second cylindre gravé d'un motif régulier. Le fait que l'on n'utilise aucun cylindre presseur constitué ou revêtu d'un matériau élastique offre plusieurs avantages, notamment en ce qui concerne la qualité d'un grainage simultané des deux faces de l'extrudat, la possibilité d'un contrôle précis de l'épaisseur de l'extrudat, l'absence de risque de collage de l'extrudat aux cylindres, et la température élevée et précise que l'on peut donner à chacun des deux cylindres, qui contribue à la qualité du grainage. Il est préférable que les deux cylindres soient conditionnés en température (à des températures identiques ou différentes), de préférence à une température comprise entre Tc - 5°C et $T_f$- 5 °C . Cette variante est particulièrement avantageuse pour le traitement de polyoléfines à haute masse moléculaire (MFI inférieur à 10 g/10 min, de préférence inférieur à 3 g/10 min, mesuré selon la nonne ASTM D1238, sous une charge de 2,16 kg, à 190°C pour les polymères contenant au moins 50 % en poids d'éthylène et à 230°C pour ceux contenant au moins 50 % de propylène). Les extrudats essentiellement constitués de ces polyoléfines de haute masse moléculaire ne sont généralement pas grainables selon les procédés connus, notamment en raison de leur trop grande élasticité, qui entraîne des problèmes d'uniformité d'épaisseur et d'uniformité du grain. Ils se prêtent particulièrement bien à la réalisation d'articles à usage médical, tels que poches à sang ou à fluides, pansements, etc. Dans ces applications, ils présentent l'avantage d'être stérilisables (à haute température) sans conduire à un risque de collage les uns sur les autres grâce au grainage superficiel ; en outre, ils sont anti-bloquants à froid.

Davantage de détails relatifs à la réalisation de cette variante peuvent être trouvés dans la demande de brevet belge n° 9500436 (EP 96201237.3) (SOLVAY).

Cette étape de grainage peut se dérouler à n'importe quel moment entre l'extrusion de l'extrudat et l'étape de relaxation (3) ; en vue de ne pas perturber le grainage réalisé, il est toutefois préférable qu'au moins 70 % de l'étirage total que subit l'extrudat au cours du déroulement du procédé de l'invention se déroule avant le grainage. De manière particulièrement préférée, le grainage se déroule entre l'étape d'étirage (2) et l'étape de relaxation (3). Selon une sous-variante avantageuse, la relaxation (3) s'effectue à la surface d'un cylindre qui est l'un des deux cylindres de grainage.

Dans la 4ème étape (trempe), un second refroidissement, très rapide, contribue encore à accroître la transparence. La trempe (4) consiste en un refroidissement brutal, qui s'effectue à une température $T_4$ inférieure à $T_c$, de préférence inférieure à $T_c$ - 50°C, et de manière particulièrement préférée inférieure à $T_c$ - 80°C. Il est souhaitable que la durée de ce refroidissement soit inférieure à 3 s, de préférence inférieure à 1 s.

Cette trempe peut notamment se réaliser en faisant passer l'extrudat dans un bain d'eau thermostatisé ou sur un cylindre réfrigéré. Un simple refroidissement par de l'air à température ambiante, généralement appliqué dans les procédés de fabrication de film soufflé, n'est pas suffisamment rapide. De ce fait, contrairement au présent procédé, ces procédés conduisent à des propriétés optiques médiocres.

Les cylindres éventuellement utilisés dans le procédé de l'invention présentent de préférence un bon état de surface. Avantageusement, il s'agit de cylindres métalliques chromés.

**EP 0 832 730 B1**

Le fait que les étapes décrites ci-dessus se déroulent "successivement" n'implique pas qu'elles soient directement consécutives. Autrement dit, une ou plusieurs autres étapes peuvent être incorporées au procédé décrit ci-dessus, pour autant qu'elles n'en affectent pas fondamentalement les effets, et ce aussi bien avant les étapes susmentionnées, après elles ou entre certaines d'entre elles. Par exemple, dans le cas où l'extrudat est déposé sur un cylindre de refroidissement (étape 1) après sa sortie de la filière plate d'une extrudeuse, il est classique d'ajuster la vitesse de rotation de ce cylindre à une valeur telle qu'il exerce une certaine traction sur l'extrudat, afin d'éviter que celui-ci ne flue excessivement. Ce "pré-étirage" se déroulant à une température relativement élevée, il influe peu sur l'orientation, la cristallinité, etc. de la matière thermoplastique, contrairement à l'étape d'étirage (2) décrite ci-dessus, qui se déroule à une température plus faible.

De même, dans le cas de la fabrication d'un film, lorsque le film est bobiné après la trempe (4), il se peut que la traction exercée sur le film par ce bobinage se répercute en amont de l'étape de trempe (4), et provoque encore un léger étirage du film entre les étapes (3) et (4), en raison de la température élevée à laquelle il se trouve encore. Ce léger étirage éventuel n'affecte pas significativement les propriétés optiques du film. Il n'affecte pas non plus significativement ses propriétés mécaniques (rigidité, ...), pour autant qu'il n'excède pas environ 25 %.

Par contre, le terme "successivement" implique que les étapes susmentionnées soient essentiellement disjointes dans le temps, et ne se chevauchent pas. En particulier, le refroidissement (1) et l'étirage (2) ne se déroulent pas simultanément, contrairement à ce qui se passe dans les procédés de fabrication de film soufflé.

Le procédé de l'invention donne d'excellents résultats lorsqu'il est appliqué à la fabrication d'un article plat, de préférence d'un film.

Bien que les films à base de polypropylène (PP) homopolymère soient nettement moins transparents que ceux à base de copolymères du propylène, du moins lorsqu'on les produit de manière conventionnelle, le procédé décrit ci-dessus permet notamment de fabriquer des films de PP homopolymère d'une épaisseur d'environ 200 $\mu$m présentant un trouble (haze) (mesuré selon la norme ASTM D 1003-95) inférieur ou égal à 3 % et une transparence totale par rapport à l'air (mesurée selon la norme ASTM D 1746-95) supérieure à 70 %. De telles propriétés optiques sont tout à fait exceptionnelles pour un film à base d'homopolymère, et soutiennent favorablement la comparaison par rapport aux films à base de copolymères.

C'est pourquoi un autre objet de la présente invention concerne un film essentiellement constitué d'au moins un homopolymère du propylène, d'une épaisseur de 100 à 250 $\mu$m, présentant un retrait à chaud d'au plus 20 %, un trouble inférieur ou égal à 3 % et une transparence totale par rapport à l'air supérieure à 70 %, susceptible d'être fabriqué au moyen du procédé susmentionné. Le retrait à chaud désigne le retrait mesuré après un séjour de 30 minutes dans une étuve ventilée à une température de $T_f$- 25°C. La présence d'une limitation concernant le retrait est due au fait que, parmi tous les films à base de PP homopolymère connus, ceux qui sont (bi)orientés selon une technique classique, c'est-à-dire à l'état solide, peuvent certes présenter des propriétés optiques voisines, mais leur retrait à chaud (défini comme étant $(L_0-L_1) / L_1$, où $L_0$ et $L_1$ désignent respectivement la longueur avant et après retrait) est alors considérable, souvent très nettement supérieur à 100 %.

Le film ainsi défini comprend au moins 95 % en poids d'au moins un homopolymère du propylène, par rapport au poids total des matières thermoplastiques, ainsi qu'éventuellement un ou plusieurs autres polymères et/ou additifs classiques. Toutefois, il est remarquable que les propriétés optiques susmentionnées puissent être obtenues en particulier lorsque le film est exempt d'additifs nucléants tels que le talc, etc.

Le film ainsi défini comporte une seule couche ; toutefois, il peut bien entendu être associé, par des techniques classiques telles que par exemple le laminage ou l'extrusion-couchage, à une ou plusieurs autres couches de matière thermoplastique, et/ou encore à des substrats d'une autre nature.

Selon une variante avantageuse de l'invention, on associe aux films obtenus selon le procédé décrit ci-dessus une couche de scellage de faible épaisseur. En effet, dans certaines applications, telles que la fabrication de poches destinées à contenir du sang ou d'autres liquides à usage médical, il est nécessaire de souder ensemble deux films de manière aisée et fiable, c'est-à-dire sans en dégrader localement les performances mécaniques, et en produisant une soudure résistante. En particulier, les poches pour liquides à usage médical doivent généralement être capables de résister à une stérilisation et éventuellement à des chutes après leur remplissage, sans que la résistance des soudures ne soit affectée. Lorsque de tels articles sont fabriqués à partir de films monocouches, on constate qu'une stérilisation à température élevée rend les soudures peu résistantes, notamment aux chocs.

On a trouvé que ce problème pouvait être résolu par l'utilisation d'une couche de scellage présentant des propriétés spécifiques.

C'est pourquoi une variante avantageuse de la présente invention concerne un procédé tel que décrit ci-dessus, appliqué à la fabrication d'un film multicouche, dans lequel l'extrudat soumis aux étapes susmentionnées comprend au moins deux couches, l'une formant la couche principale (A) du film, et une autre couche, extérieure, étant une couche de scellage (B) d'épaisseur inférieure à celle de la couche principale (A) et dont la matière thermoplastique constitutive présente une température de fusion inférieure, et un indice de fluidité en fondu au moins 2 fois supérieur, à ceux de la matière thermoplastique constitutive de la couche principale (A). Cette variante peut se réaliser par toute technique connue, par exemple en utilisant une filière de coextrusion alimentée par au moins deux extrudeuses distinctes.

La couche de scellage (B) a typiquement une épaisseur valant au moins 5 % de celle de la couche principale (A). Son épaisseur vaut par ailleurs généralement moins de 40 %, et de préférence moins de 20 %, de celle de la couche principale (A). De manière absolue, on préfère que l'épaisseur de la couche de scellage soit d'au moins 5 $\mu$m, en particulier d'au moins 20 $\mu$m.

La matière thermoplastique constitutive de la couche principale (A) répond en tous points à la définition de la matière thermoplastique fournie lors de la définition générale du procédé, y compris en ce qui concerne ses variantes préférées. Il est à noter que dans la présente variante, les différents paramètres ($T_c$, $T_f$, etc.) mentionnés dans ladite définition générale se rapportent spécifiquement à la matière thermoplastique constitutive de la couche principale (A).

Une autre variante simple consiste en un procédé tel que défini précédemment, appliqué à la fabrication d'un film multicouche, comprenant en outre une étape d'extrusion-couchage ou de laminage, postérieure à l'étape de trempe (4), par laquelle on munit le film obtenu (A) d'une couche de scellage (B) dont la matière thermoplastique constitutive présente une température de fusion inférieure, et un indice de fluidité en fondu au moins 2 fois supérieur, à ceux de la matière thermoplastique constitutive de (A).

Les indices de fluidité en fondu (melt index) sont mesurés selon la norme ISO R1133 (version de 1981), dans les conditions usuelles en fonction des matériaux considérés.

Toute matière thermoplastique répondant aux conditions susmentionnées peut être utilisée comme constituant de la couche de scellage (B). Il s'agit de préférence d'un polymère ou mélange de polymères compatible avec la couche principale (A), ce qui permet d'éviter l'utilisation d'une couche adhésive intermédiaire. De bons résultats ont été obtenus lorsque la matière thermoplastique constitutive de la couche de scellage (B) comprend au moins un copolymère d'$\alpha$-oléfines, en particulier un copolymère éthylène-propylène (E/P), de préférence un copolymère E/P de proportions pondérales 1/99 à 8/92.

Les propriétés thermiques de la couche de scellage (B) permettent que seule celle-ci fonde lors du soudage ; l'opération est plus rapide et les soudures résistent mieux au choc. Avantageusement, la température de fusion de la matière thermoplastique constitutive de la couche de scellage (B) est inférieure d'au moins 10°C à celle de la matière thermoplastique constitutive de la couche principale (A), de préférence d'au moins 20°C. Avantageusement, l'indice de fluidité en fondu de la matière thermoplastique constitutive de la couche de scellage (B) est au moins 2 fois supérieur à celui de la matière thermoplastique constitutive de la couche principale (A), de préférence au moins 4 fois supérieur (dans les conditions de mesure susmentionnées).

Si nécessaire, la souplesse du film multicouche résultant peut être accrue lorsque la matière thermoplastique constitutive de la couche principale (A) et/ou la matière thermoplastique constitutive de la couche de scellage (B) comprennent au moins un copolymère compatible avec son ou ses autres constituants, et qui soit apte à accroître la souplesse de cette couche (B). De préférence, on utilise au moins un copolymère à blocs du type styrène-éthylène-butadiène-styrène (SEBS) (par exemple le produit KRATON® 1657 de SHELL) ou styrène-éthylène-propylène-styrène (SEPS). Avantageusement, la teneur pondérale de ce copolymère au sein de la couche (B) est de 10 à 40 %.

Outre la couche principale et la couche de scellage, le film peut encore éventuellement comprendre une ou plusieurs autres couches à base d'un ou plusieurs matériaux thermoplastiques.

Les exemples suivants illustrent de façon non limitative les avantages du procédé et du film de l'invention.

Exemple 1 - Film monocouche à base d'homopolymère

Un polypropylène homopolymère ELTEX® P HL402 (SOLVAY) ($T_c$ = 110°C, $T_f$= 158°C, temps de relaxation moyen $\tau_0$ = 0,6 s (avant étirage)), de 1,5 mm d'épaisseur et 60 cm de large, est extrudé au moyen d'une extrudeuse monovis (températures de 160 à 230°C) équipée d'une filière plate (température 230°C) (température matière de 235°C). Cet extrudat est étiré de 200 % à la sortie de la filière, et est ensuite déposé sur un cylindre dont la température, conditionnée par circulation d'eau, vaut 135°C, et la vitesse périphérique de 2,5 m/min. L'extrudat reste en contact avec ce cylindre pendant 10 s, ce qui permet son refroidissement homogène. Il est ensuite étiré d'un facteur 3 sous l'effet de la rotation du cylindre suivant, également conditionné à 135 °C mais tournant à une vitesse périphérique de 7,5 m/min (soit une longueur de contact d'environ 25 cm). L'extrudat reste sur ce cylindre pendant environ 2 secondes (soit sur une longueur de 25 cm), ce qui permet de relaxer significativement les tensions générées par l'étirage à basse température. Il est ensuite encore étiré de 20 % avant d'être trempé dans un bain d'eau à 10°C et bobiné à une vitesse de 9 m/min. Son épaisseur finale est de 200 $\mu$m.

Le film ainsi obtenu présente un trouble de 3 % (norme ASTM D 1003), une brillance de 88 % (norme ASTM D 2457) et une transparence totale par rapport à l'air de 85 % (norme ASTM D 1746), ce qui est exceptionnel.

Des soudures (conditions de soudage : température = 140°C, pression = 10 bars, durée = 1 s), recuites à 121°C pendant 30 minutes, ne résistent pas à un essai de traction réalisé à 23°C et 500 cm/minute (rupture de la soudure sans allongement plastique de l'échantillon).

Exemple 2 - Film multicouche

Un extrudat de 1,5 mm d'épaisseur et 45 cm de large, composé d'une couche principale du polypropylène homopolymère ELTEX P HL402 décrit ci-dessus et d'une couche de scellage en copolymère éthylène-propylène (de proportions pondérales 3,3/96,7) ELTEX KS 413 ($T_c$ = 95 °C, $T_f$= 137°C) est extrudé au moyen d'une filière plate de coextrusion multicanaux (température 230°C) alimentée par deux extrudeuses monovis (dont les températures des fourreaux augmentent progressivement de 160 à 230°C) à une température matière de 235°C. Ensuite, semblablement à l'exemple 1, cet extrudat est étiré de 200 %, puis déposé sur un cylindre conditionné à 130°C, tournant à une vitesse périphérique de 2,5 m/min, avec lequel il reste en contact pendant 10 s. L'extrudat est ensuite étiré d'un facteur 3 grâce à la traction exercée par le cylindre suivant, également maintenu à 130°C mais tournant à une vitesse périphérique de 7,5 m/min. L'extrudat reste sur ce cylindre et s'y relaxe pendant environ 2 secondes (soit sur une longueur d'environ 25 cm). Il est ensuite encore étiré, trempé et bobiné comme dans l'exemple 1. Son épaisseur finale est de 200 μm (dont la couche de scellage représente 20 μm).

Le film ainsi obtenu présente un trouble de 2,9 %, une brillance de 74 % et une transparence totale par rapport à l'air de 71 % (mesurés selon les normes susmentionnées).

Des soudures réalisées et recuites comme dans l'exemple 1 résistent cette fois au même essai de traction (allongement plastique de l'échantillon en dehors de la soudure, sans rupture de la soudure).

Exemple 3 - Film monocouche à base de copolymère

Un extrudat d'environ 1,5 mm d'épaisseur et 60 cm de large, constituée d'un copolymère éthylène-propylène (de proportions pondérales 2,7/97,3) ELTEX P KL104 ($T_c$ = 95°C ; $T_f$= 145°C ; $\tau_0 \simeq$ 0,5 s (avant étirage)) est extrudé au moyen d'une extrudeuse monovis munie d'une filière plate, à une température de 220°C. Cet extrudat est étiré de 200 % à la sortie de la filière et déposé ensuite sur un cylindre conditionné à 125°C par circulation d'eau et dont la vitesse périphérique est de 5 m/minute. L'extrudat, qui a alors une épaisseur d'environ 700 μm, reste en contact avec ce cylindre pendant 4,5 s. Il est ensuite étiré d'un facteur 3 sous l'effet du cylindre suivant, également conditionné à 125°C mais tournant à une vitesse périphérique de 15 m/minute. L'extrudat reste en contact avec ce cylindre et s'y relaxe pendant environ 1 s (soit sur une longueur d'environ 25 cm), avant d'être trempé dans un bain d'eau à 10°C et bobiné à une vitesse de 17 m/min.

Le film ainsi obtenu présente un trouble de 1,3 %, une brillance de 91 %, et une transparence totale par rapport à l'air de 60 % (mesurés selon les normes susmentionnées).

Le tableau qui suit résume les principales conditions opératoires des différents exemples, ainsi que les propriétés des films obtenus.

| | Exemples → | 1 | 2 | 3 |
|---|---|---|---|---|
| Nature de l'extrudat | matériau | PP | 2 couches : PP + copo E/P | copo E/P |
| | $T_c$ (°C) | 110 | PP : 110    copo : 95 | 95 |
| | $T_f$ (°C) | 158 | PP : 158    copo : 137 | 145 |
| | $\tau_0$ (s) | 0,6 | PP : 0,6 | 0,5 |
| extrusion | température (°C) | 235 | 235 | 220 |
| refroidissement (1) | température (°C) | 135 | 130 | 125 |
| | durée (s) | 10 | 10 | 4,5 |
| étirage (2) | facteur | 3 | 3 | 3 |
| relaxation (3) | température (°C) | 135 | 130 | 125 |
| | durée (s) | 2 | 2 | 1 |
| trempe (4) | température (°C) | 10 | 10 | 10 |
| | durée (s) | 0,04 | 0,04 | 0,04 |
| Propriétés du film obtenu | épaisseur (µm) | 200 | 200 | 200 |
| | trouble (%) | 3 | 2,9 | 1,3 |
| | brillance (%) | 88 | 74 | 91 |
| | transparence (%) | 85 | 71 | 60 |

**Revendications**

1. Procédé de mise en oeuvre d'une matière thermoplastique semi-cristalline, comprenant successivement les étapes suivantes :

   - (1) un extrudat de matière thermoplastique semi-cristalline en fusion est refroidi à une température $T_1$ supérieure à la température de cristallisation de la matière thermoplastique ($T_c$) et inférieure à $T_f$+ 5°C, $T_f$ désignant la température de fusion de la matière thermoplastique ;
   - (2) l'extrudat est ensuite étiré à l'état fondu ;
   - (3) l'extrudat est ensuite relaxé, à une température $T_3$ comprise entre $T_c$ et $T_f$, pendant une durée au moins égale au temps moyen de relaxation ($\tau_3$) de la matière thermoplastique à la température de relaxation et après l'étirage ;
   - (4) l'extrudat est ensuite trempé à une température $T_4$ inférieure à $T_c$.

2. Procédé selon la revendication 1, comprenant en outre, préalablement à l'étape de relaxation (3), une étape de grainage de l'extrudat dans laquelle ce dernier est pincé entre deux cylindres métalliques.

3. Procédé selon l'une des revendications précédentes, dans lequel le taux d'étirage lors de l'étape (2) est d'au moins 200 %.

**4.** Procédé selon l'une des revendications précédentes, appliqué à la fabrication d'un article plat.

**5.** Procédé selon la revendication 4, appliqué à la fabrication d'un film multicouche, dans lequel l'extrudat comprend au moins deux couches, l'une formant la couche principale (A) du film, et une autre couche, extérieure, étant une couche de scellage (B) d'épaisseur inférieure à celle de la couche principale (A) et dont la matière thermoplastique constitutive présente une température de fusion inférieure, et un indice de fluidité en fondu au moins 2 fois supérieur, à ceux de la matière thermoplastique constitutive de la couche principale (A).

**6.** Procédé selon la revendication 4, appliqué à la fabrication d'un film multicouche, comprenant en outre une étape d'extrusion-couchage ou de laminage, postérieure à l'étape de trempe (4), par laquelle on munit le film obtenu (A) d'une couche de scellage (B) dont la matière thermoplastique constitutive présente une température de fusion inférieure, et un indice de fluidité en fondu au moins 2 fois supérieur, à ceux de la matière thermoplastique constitutive de (A).

**7.** Procédé selon l'une des revendications 5 ou 6, dans lequel la matière thermoplastique constitutive de la couche de scellage (B) comprend au moins un copolymère d'$\alpha$-oléfines.

**8.** Procédé selon l'une des revendications 5 à 7, dans lequel la matière thermoplastique constitutive de la couche principale (A) et/ou la matière thermoplastique constitutive de la couche de scellage (B) comprennent au moins un copolymère compatible avec son ou ses autres constituants, et qui soit apte à accroître la souplesse de cette couche (B).

**9.** Film essentiellement constitué d'au moins un homopolymère du propylène, d'une épaisseur de 100 à 250 μm, présentant un retrait à chaud d'au plus 20 %, un trouble inférieur ou égal à 3 % et une transparence totale par rapport à l'air supérieure à 70 %, susceptible d'être fabriqué au moyen du procédé selon la revendication 4.

**10.** Film selon la revendication précédente, exempt d'additifs nucléants.

**Patentansprüche**

**1.** Verfahren zur Verarbeitung eines semikristallinen thermoplastischen Kunststoffs, das nacheinander die folgenden Schritte umfasst:

- (1) ein Extrudat aus geschmolzenem semikristallinem thermoplastischem Kunststoff wird auf eine Temperatur $T_1$ abgekühlt, die höher als die Kristallisations-temperatur des thermoplastischen Kunststoffs ($T_c$) und niedriger als $T_f$ + 5 °C ist, wobei $T_f$ die Schmelztemperatur des thermoplastischen Kunststoffs bezeichnet;
- (2) das Extrudat wird dann im geschmolzenen Zustand gereckt;
- (3) das Extrudat wird dann bei einer Temperatur $T_3$, die zwischen $T_c$ und $T_f$ liegt, eine Zeit lang, die wenigstens gleich der mittleren Relaxationszeit ($\tau_3$) des thermoplastischen Kunststoffs bei der Relaxationstemperatur und nach dem Recken ist, relaxiert;
- (4) das Extrudat wird dann bei einer Temperatur $T_4$, die niedriger als $T_c$ ist, abgeschreckt.

**2.** Verfahren gemäß Anspruch 1, das außerdem vor dem Relaxationsschritt (3) einen Schritt zum Prägen des Extrudats umfasst, bei dem dieses Letztere zwischen zwei Metallzylindern gepresst wird.

**3.** Verfahren gemäß einem der vorhergehenden Ansprüche, bei dem der Reckgrad beim Schritt (2) wenigstens 200% beträgt.

**4.** Verfahren gemäß einem der vorhergehenden Ansprüche, angewandt auf die Herstellung eines flachen Gegenstands.

**5.** Verfahren gemäß Anspruch 4, angewandt auf die Herstellung eines Mehrschichtfilms, bei dem das Extrudat wenigstens zwei Schichten umfasst, wobei eine die Hauptschicht (A) des Films bildet und eine weitere, äußere Schicht eine Siegelschicht (B) mit einer geringeren Dicke als die der Hauptschicht (A) ist, deren thermoplastischer Grundkunststoff eine niedrigere Schmelztemperatur und einen wenigstens 2 Mal höheren Schmelzindex als diejenigen des thermoplastischen Grundkunststoffs der Hauptschicht (A) aufweist.

**6.** Verfahren gemäß Anspruch 4, angewandt auf die Herstellung eines Mehrschichtfilms, das außerdem einen Schritt zum Extrusionskaschieren oder zum Laminieren nach dem Schritt zum Abschrecken (4) umfasst, durch den man den erhaltenen Film (A) mit einer Siegelschicht (B) versieht, deren thermoplastischer Grundkunststoff eine niedrigere Schmelztemperatur und einen wenigstens 2 Mal höheren Schmelzindex als diejenigen des thermoplastischen Grundkunststoffs von (A) aufweist.

**7.** Verfahren gemäß einem der Ansprüche 5 oder 6, bei dem der thermoplastische Grundkunststoff der Siegelschicht (B) wenigstens ein $\alpha$-Olefin-Copolymer umfasst.

**8.** Verfahren gemäß einem der Ansprüche 5 bis 7, bei dem der thermoplastische Grundkunststoff der Hauptschicht (A) und/oder der thermoplastische Grundkunststoff der Siegelschicht (B) wenigstens ein Copolymer umfassen, das mit ihren weiteren Bestandteilen kompatibel ist und das die Biegsamkeit dieser Schicht (B) erhöhen kann.

**9.** Film, der im Wesentlichen aus wenigstens einem Propylen-Homopolymer besteht, mit einer Dicke von 100 bis 250 µm, der eine Schrumpfung in der Hitze von höchstens 20%, eine Trübung kleiner oder gleich 3% und eine Gesamttransparenz, bezogen auf Luft, höher als 70% aufweist, der mit dem Verfahren gemäß Anspruch 4 hergestellt werden kann.

**10.** Film gemäß dem vorhergehenden Anspruch, der frei von Nukleationszusätzen ist.

**Claims**

**1.** Process for processing a semicrystalline thermoplastic, which includes, in succession, the following steps:

- (1) a molten semicrystalline thermoplastic extrudate is cooled to a temperature $T_1$ which is greater than the crystallization temperature ($T_c$) of the thermoplastic and is less than $T_f$+ 5°C, $T_f$ denoting the melting point of the thermoplastic;
- (2) next, the extrudate is drawn in the molten state;
- (3) next, the extrudate is relaxed, at a temperature $T_3$ which is between $T_c$ and $T_f$, for a duration of at least equal to the average relaxation time ($\tau_3$) of the thermoplastic at the relaxation temperature and after the drawing;
- (4) next, the extrudate is quenched to a temperature $T_4$ which is less than $T_c$.

**2.** Process according to Claim 1, which furthermore includes, prior to the relaxation step (3), a step of embossing the extrudate, in which the latter is pinched between two metal rolls.

**3.** Process according to one of the preceding claims, in which the draw ratio during step (2) is at least 200%.

**4.** Process according to one of the preceding claims, applied to the manufacture of a flat article.

**5.** Process according to Claim 4, applied to the manufacture of a multilayer film, in which the extrudate includes at least two layers, one forming the main layer (A) of the film and another, external layer being a sealing layer (B) which has a thickness less than that of the main layer (A) and the thermoplastic of which it is composed has a melting point and a melt flow index which are respectively less than and at least twice as great as those of the thermoplastic of which the main layer (A) is composed.

**6.** Process according to Claim 4, applied to the manufacture of a multilayer film, which furthermore includes, after the quenching step (4), an extrusion-coating or laminating step by means of which the film obtained (A) is provided with a sealing layer (B), the thermoplastic of which this sealing layer is composed having a melting point and a melt flow index which are respectively less than and at least twice as great as those of the thermoplastic of which (A) is composed.

**7.** Process according to either of Claims 5 and 6, in which the thermoplastic of which the sealing layer (B) is composed includes at least one $\alpha$-olefin copolymer.

**8.** Process according to one of Claims 5 to 7, in which the thermoplastic of which the main layer (A) is composed and/or the thermoplastic of which the sealing layer (B) is composed include at least one copolymer which is compatible with its other constituent or constituents and which is capable of increasing the flexibility of this layer (B).

9. Film essentially consisting of at least one propylene homopolymer, with a thickness of from 100 to 250 µm, having a hot shrinkage of at most 20%, a haze of less than or equal to 3% and a total transparency with respect to air of greater than 70%, which is capable of being manufactured by means of the process according to Claim 4.

10. Film, according to the previous claim, free of nucleating additives.